**Europäisches Patentamt**

**European Patent Office**

**Office européen des brevets**

(19)

(11) Publication number: **0 040 046**
**A1**

(12) **EUROPEAN PATENT APPLICATION**

(21) Application number: **81302010.4**

(22) Date of filing: **07.05.81**

(51) Int. Cl.³: **H 04 Q 11/04**
**H 04 Q 3/54**

(30) Priority: **08.05.80 CA 351492**

(43) Date of publication of application:
**18.11.81 Bulletin 81/46**

(84) Designated Contracting States:
**DE FR GB IT NL**

(71) Applicant: **International Standard Electric Corporation**
**320 Park Avenue**
**New York New York 10022(US)**

(72) Inventor: **Ahmed, Fahim**
**Apt, 608 186 Edinburgh Road South**
**Guelph Ontario(CA)**

(74) Representative: **Capsey, Sydney Ross**
**ITT UK Patent Department Maidstone Road**
**Foots Cray Sidcup DA14 5HT(GB)**

(54) Modular telecommunications system.

(57) A telecommunications system for both PABX and key systems use.

The system is assembled in modules capable of physical and electrical interconnection and expansion. The system has a control apparatus housed in one modular sectional unit. The stations of the system are grouped with the control for each group being housed within a sectional unit. The units are adapted for physical mounting to one another and each unit is electrically connected into the system by two flat conductor cables jumpered to the adjacent unit. This modularity is made possible by each unit having internal bus structure for the bidirectional flow of information in the module, the intermodular connection acting as the bus between groups and the central control. Further, each group has a data memory for storing information directed into or out of modular unit on a random basis for reading out that information when the destination module is ready to receive that information.

EP 0 040 046 A1

./...

Croydon Printing Company Ltd

FIG 2

FIG 2A

FIG 2B

0040046

F.Ahmed 3

## MODULAR TELECOMMUNICATIONS SYSTEM

Distributed processing systems in the telecommunications art are well known, and their number is rapidly proliferating.  One type is shown in U.S. Patent 4,127,742 (G.Couturier, et al).  In that system, intercommunication between a group control and the system control is effected over a number of busses, a time division speech bus, various scanner control conductors, and other control conductors.

Also well known are telecommunications systems for inter-connecting multiple lines at multiple line telephone instruments over time-divided conductors, there being two speech conductors common to all lines having access to the instrument and two or more control conductors coupled to each instrument.  Where the transmission of control data is bidirectional, only two control conductors are required, as shown by U.S. Patent 3,935,396 (J.Barselotti, et al).  Unidirectional transmission of data requiring four conductors - two for transmitting and two for receiving - is known by many U.S. patents, such as U.S. Patent 3,475,256 (R.L.Carbrey).

According to the invention, there is provided a modular time division telecommunications system comprising a plurality of terminals, said terminals being grouped into a lesser plurality of groups, said system including a central controller for monitoring said plurality of groups, characterised in this that each of said groups includes a group controller for monitoring the terminals within the respective group, that individual memory means is associated with each said controller, that further resource circuits are associated with each of said controllers, that each of said controllers is housed in a separate modular unit, that bus means intercommunicate between each controller, its associated memory and resource circuits to transfer call control data within the respective unit, each said bus means being self-contained within its own unit, and that a system bus couples said units, said system bus providing call control and supervision data transfer between said system and said groups over a single multiple conductor cable extending between a modular unit and the adjacent modular units.

The arrangement to be described is a telecommunications system capable of key system usage and capable of use as a PABX, and which uses time division transmission of control data between stations (terminals) of the system. Each station or trunk of the system has a pair of control conductors and a pair of speech conductors extending from the station or trunk to the group control. Information on the control conductors is time multiplexed for control of calls to and from the stations. Data on the speech pair may be fed in analog form from the station to a codec at the group for conversion into a suitable time division code. Alternatively coders can be placed in the station instrument for digital transmission throughout the system.

The system as disclosed herein uses two-level hierachy comprised of a central control as one level and plural group control as the other level. In the system, each group control is housed in a separate module or unit. The system uses a central control which is also housed in a module. Interconnection between the group controls and the central control is by two multiple conductor cables extending from a terminal block in one module to the adjacent module, one for data and one for coded speech. A power and test cable are also connected to complete the system. Thus, to expand the system within its intended capacity, one or more added group modules are mounted on the structure and interconnect cables added for each module to the adjacent module.

To enable one data bus to interconnect a module to the adjacent module, each module must be fully self-contained for internal data control. The self-containment is produced by having internal busses extending from the processor of a module to the memory and other intra-modular components. One such internal bus is called the nucleus bus in that it interconnects the module processor with its program memory and its own resources components. The nucleus bus is kept to a short physical length to minimize the possibility of noise and accidental shorts on the bus. Such busses are provided internally within the system control module and within each group module.

Further adding to the efficiency of the internal and external bus approach is a polling or mail box RAM approach, (see Canadian application No. S.N.332,385). In that disclosure, data transmitted from the system to a group module was temporarily stored until the group processor was prepared to handle that data. Similarly, on transmission of data from the group to the system, the data was temporarily stored within the group until the system evidenced its ability to handle the receipt of the data. By this expedient of the temporary memory to hold data to or from the system bus, the use of the system bus can be controlled to the point that the present inter-modular connection becomes possible.

An embodiment of the invention will now be described with reference to the accompanying drawings, in which:-

Figure 1 is a front view in elevation of a modular cabinet housing a system, the cabinet with its cover door removed, and which embodies the invention;

Figure 2 is a block diagram showing how Figs. 2A and 2B are positioned to form a schematic diagram of an embodiment of the invention;

Figure 3 is a block diagram of a typical system controller as used in Figure 2;

Figure 4 is a block diagram of the group controller as used herein;

Figure 5 is a block diagram of the PCM speech network; and

Figure 6 is a block diagram of a typical station-to-group time slot interchanging arrangement.

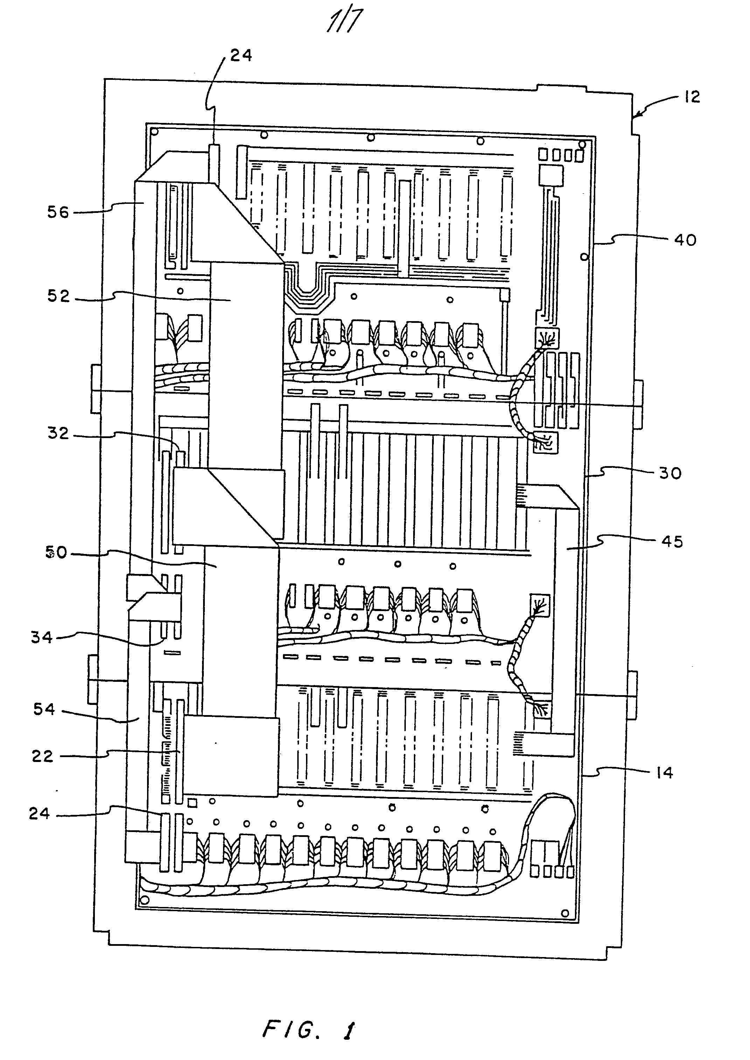

Figure 1 shows the physical structure of a system; which includes three modular, vertically stacked units to provide two groups, each having 24-port capability.

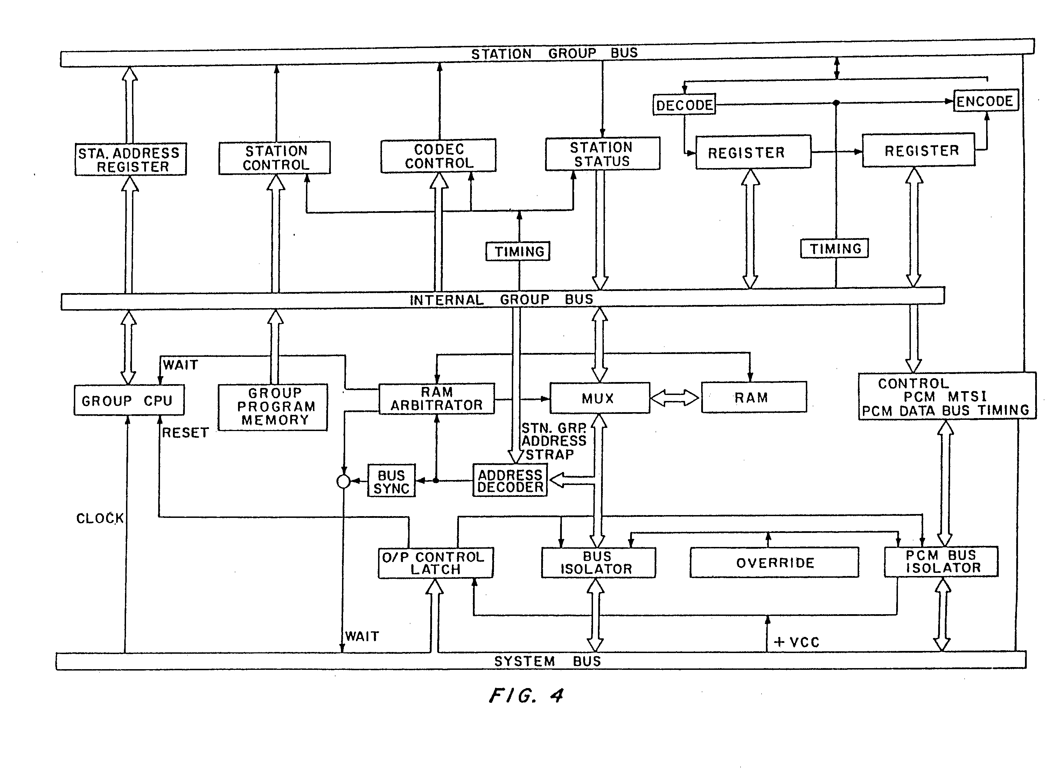

The cabinet 12 has as a lowermost unit 14, the system control comprised of a plurality of printed circuit boards inserted in the card cage of the unit in standard fashion. The circuits which make up the PC boards are shown in Figure 4. Connections are made from edge connections (not shown) or the like within the card cage to terminal blocks 22, vertically disposed along the side of the unit. A pair of elongated terminal blocks 22 provide 24 control connections, sixteen address and eight data, while a set of smaller blocks 24 (adjacent blocks 22) provide the speech or PCM connections on thirteen terminals. The PCM terminals include eight data, three clock and two signalling terminal connections.

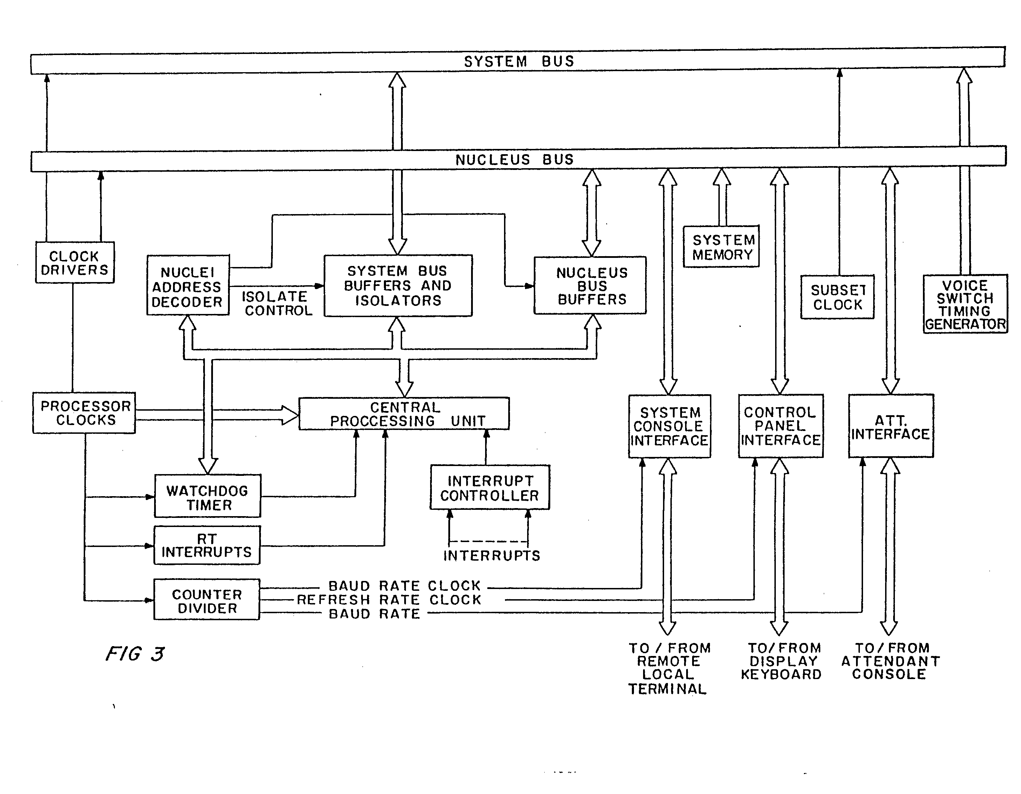

Stacked physically above the bottom system control unit 14 is one group unit 30, which includes parallel PC boards inserted into the card cage to produce the group functions shown in Figure 3. The connections from the PC boards are jumpered between paired terminal blocks 32 for the control functions. The two blocks have a direct jumpered connection between like terminals so that connections from the unit can be made to the system unit and to the next adjacent group unit. A second pair of terminal blocks 34 is provided with its contacts jumpered to provide PCM speech data transfer between adjacent units.

A third unit 40 is stacked on the group unit 30. This group unit 40 is virtually identical to the group unit 30 and has terminal blocks for its own connection to the system and to an adjacent unit when an added group unit (not shown) is needed and stacked on the then existing cabinet structure.

To interconnect the units, two flat conductor cables are employed. A first cable 50 acts as the system bus interconnecting the system unit 14 with the adjacent group unit 30. The continuation of the system bus through cable 52 couples group unit 30 to group unit 40. The second flat conductor cable 54 provides the PCM speech bus from system unit 14 to group unit 30. The continuation of this bus is formed by cable 56 between the two group units. By mounting added group units on the existing structure and extending two flat conductor cables to the adjacent group, a system of up to one hundred and fourty four ports may be formed by the present configurations, some of the ports being directed to stations of the system and others to trunks to a central office or the like,

Additionally, a test bus 45 is connected in daisy chain fashion from the system unit to the group units and a power supply cable is joined to the units. All interconnection between units (other than power and test) is effected over the daisy-chained busses, system control bus and PCM line.

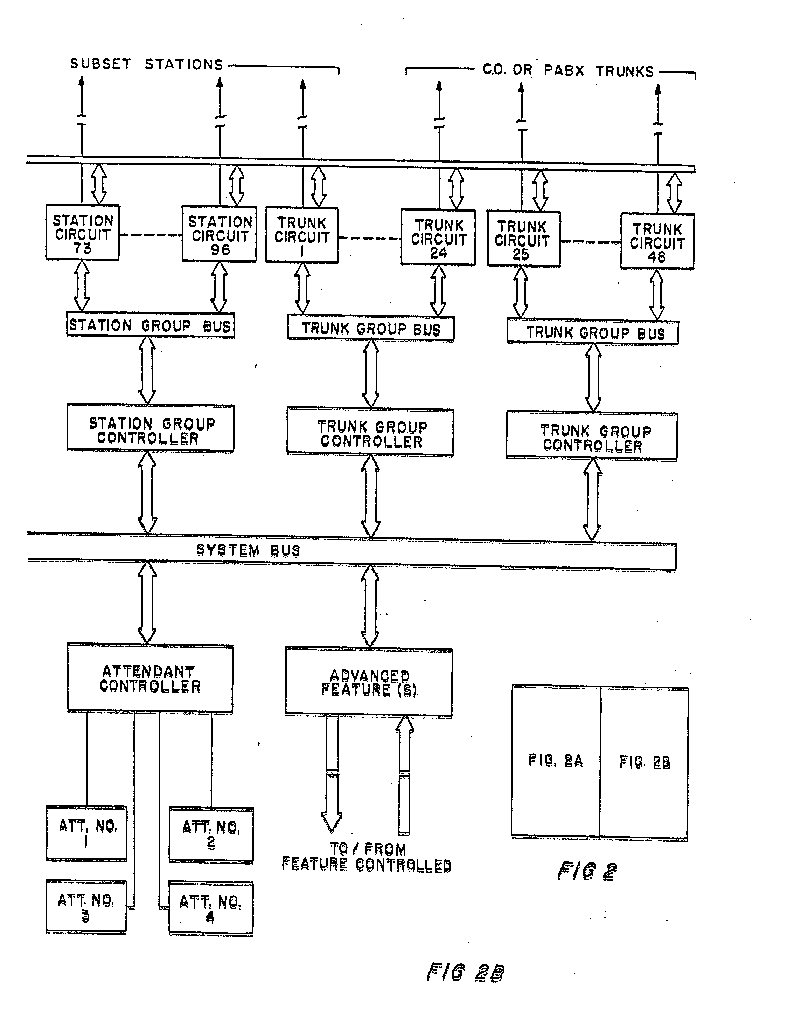

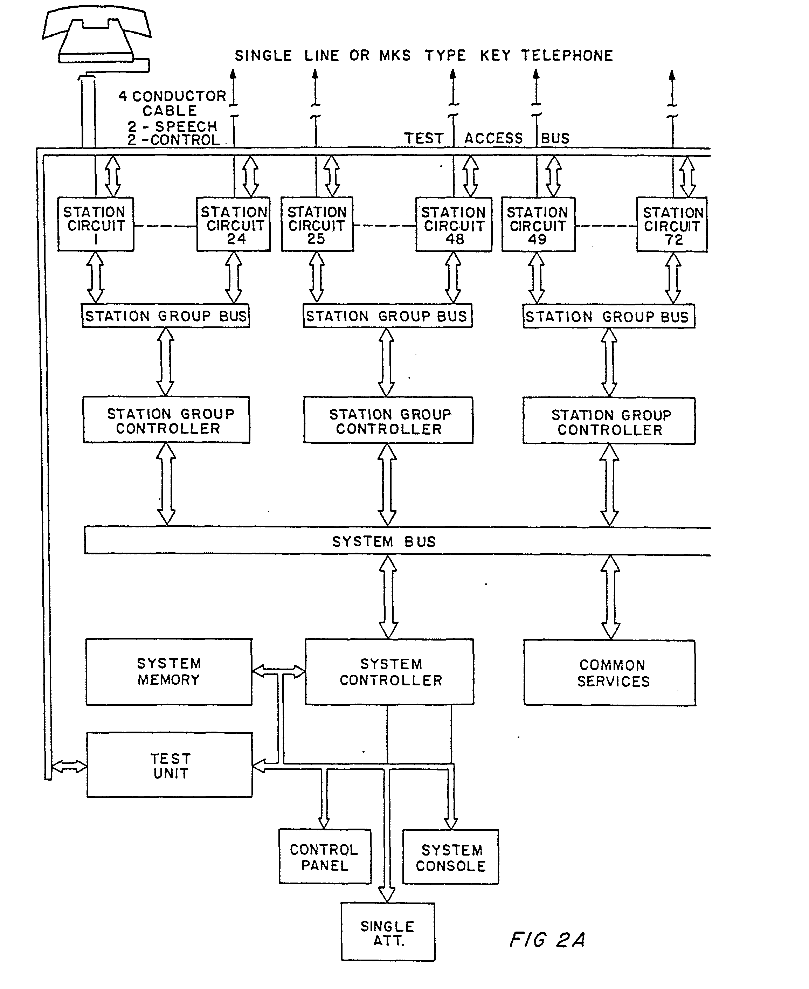

The system control architecture is based on a multi-microprocessor concept, arranged in a two-level hierarchy, seen best in Figure 2.

A central system controller including a processor directs the operation of the second level of processors within the respective group controllers, which in turn each control a portion of the total system hardware. The central system processor within the system controller communicates with the second level processors via a high speed parallel data bus called the System Bus (Cables 50, 52 of Fig. 1).

Each processor (both at the system and group level) has at its disposal its own memory and input/output resources.

The resources of the System Controller processor include the System Memory and System Administrative I/O channels such as Control Panel and System Console. Communication between the System Controller and its own resources is via a dedicated bus called the Nucleus Bus, internal to the processor module. Each group or second level processor is required to share a portion of its resources with the System Controller. This shared resources is the means by which the System Controller processor directs the operation of the second level processors.

The System Controller processor has responsibility for overall system management, in terms of voice switch control and path selection, allocation of pooled system resources such as digit registers, tones, etc., data base management, call processing, feature invocation, administrative processing, system diagnostics, initialization and error recovery.

The group or second level processors are delegated tasks which are more hardware dependent, such as the direct control of station or trunk circuits, digit collection, conference network control, multi-attendant control, etc. Each group controller communicates with the circuits which it controls over an internal bus called the group bus. The station or trunk circuits in turn communicate with the station or trunk over respective four-conductor cables, as in the above quoted Barsellotti, et al patent.

Every group comprised of up to 24 station and/or trunk circuits is driven by its own second level processor within a Group Controller.

The Group Controllers for groups of stations communicate with keyphone subsets of the respective stations by transmitting lamp and tone caller status and receiving keyboards and hookswitch status data to and from each subset in turn. The Group Controller validates the received data, identifies a service request and informs the System Controller only if the request is genuine. It also monitors the hookswitch data for hookswitch flash, group recall, etc., and controls the ring and test access relays.

When a Group Controller acts as a Controller for a trunk group, it monitors and controls a group of up to 24 trunks of different types; e.g., loop start, ground start, etc.

The other second level processors perform similar dedicated hard-ware oriented tasks. On command from the system processor, the group processor acting as a dial pulse register will simultaneously monitor up to four channels for digit collection. A conference processor will look after the setting up of a conference once the conference configuration is provided to it by the System Controller.

Functions performed by the Group Controller include those needing the manipulation of relatively large amounts of data, quite frequently by the System Controller. Thus, when an event is detected at one station, such as the selection of a line which appears at every station in the system, the System Controller has to update the status of the corresponding lamp at each station. This updating involves the searching of assignment tables in the system's data base and updating each lamp that matches the stored data in the table. When the total number of stations is multiplied by the number of lamps at each station, the need for a fast communication path becomes apparent. The disclosed method of communication is implemented by using the mailbox memory approach referred to previously.

Using the mailbox technique, each Group Controller processor shares its data memory with the system processor. The System Controller is able to take over any Group Controller's RAM, treating it as its own, and can thus alter large areas at the full speed of which it is capable.

A further type of function performed by the Group Controller is one which needs small amounts of data transfer, such as a register function of the processor. When the System Controller is used for digit collection, it transmits to the involved group processor the PCM signalling time slot number, and the number of digits to monitor. This two or three byte exchange of information is sufficient for the group processor to start and continue its job quite independently for several seconds, at the end of which it will inform the system processor of the digits collected, if the inter-digit timeout has expired or the dialing station has terminated the call.

For these types of functions a byte exchange hand-shaking protocol is optimum, due to its reduced hardware requirement.

The voice switch of the system is preferably a fully non-blocking 192 one-way time slot TDM switch adopted for 8 bit companded PCM or similar suitable code.

Figure 3 shows the components of the System Controller having access to the Nucleus Bus and to the System Bus. Also shown in a System Central Processing Unit (CPU) with its Interrupt Controller and clock inputs.

Addresses for data fed from the CPU are transmitted to the Nuclei Address Decoder to determine whether the address is that of the Nucleus Bus or that of the Systems Bus, due to the presence or absence of a suitable prefix. The Nucleus Bus is physically a bus of short length, of the order of twelve inches or less in length, and located totally within the system control unit. It provides communications between the CPU via Nucleus Bus Buffers to the System Memory, the System Console Interface, the Control Panel Interface and the Attendant Interfaces. This bus constitutes sixteen parallel conductors extending from the CPU buffers.

The System CPU also accesses the System Bus for interchanging information with the groups. The System Bus is the multiple conductor flat cable (50, 52 in Figure 1) extending from the Systems Controller in daisy chain fashion to the group control units, an exemplary group controller being shown in Figure 4.

The purpose of the Group Controller, see Figure 4, is to relieve the System Controller of real-time functions associated with station or trunk (port) interfaces. A Group Controller, such as shown in Figure 4 is mounted on a single printed circuit assembly to perform all the control functions associated with 24 port interfaces, and operates to communicate with the remainder of the system via the System Bus. A brief description of the blocks of Figure 4 is as follows:

The Group Controller contains as its CPU a dedicated 8085A single chip 8-bit N-channel microprocessor. The software for the group control function is in the program memory of the controller. The allocated memory space for the program may be 4K bytes.

The Mail Box RAM is a static memory which acts to maintain the status of the port interfaces. The RAM is also shared by the System Controller. The allocated memory space is 4K bytes. The RAM Arbitrator decides whether the Internal Group Bus or the System Bus will have access to the mail box RAM. The access is on a first come-first served basis. If a request for RAM access is made from either the group or systems processor while the previous request has not been serviced, the RAM arbitrator will generate a wait flag to the requested CPU.

A multiplexer MUX is provided to select the data, address and Read/Write signal of the Group Bus or the System Bus for the mail box RAM.

The Address Decoder block contains address decoding logic to select one of the available Group Controllers.

The Bus Sync block includes the logic circuitry required to generate a wait cycle to the system CPU.

The block labeled PCM MTSI is a time slot interchanger which maintains the digital information relating to the TX/RX PCM time slots of codecs on the line interfaces under the control of the CPU.

O/P Control Latch is used by the system CPU to reset the Group Controller and to isolate the data latches from the System Bus. This latch function becomes important under system initialization, diagnostic and maintenance conditions.

The Bus Isolator block contains the logic circuitry required to isolate the 9-bits of bidirectional PCM data from the System Bus. It is controlled by the O/P control latch and the local power fail logic to perform its isolation function.

The Power Up/Down Control CCT & Manual Override circuit acts to disable the Bus isolators during a Group Controller power fail condition or when the manual override switch is activated during maintenance.

The PCM Bus Isolator contains the logic circuitry required to isolate the PCM bidirectional data bus from the System Bus. It is controlled by the system power rail of +VCC, O/P Control latch and the local power fail logic.

The Station/Trunk Address Register is an octal latch required to select one of twenty-four line interfaces.

Station/Trunk Control is an 8-bit parallel to serial shift register for station/trunk control functions; i.e., line card identity or an alarm condition, and is clocked at a frequency of 1.54 MHz.

The Codec Control is an 8-bit parallel to serial shift register required to direct the codecs on the line cards to transmit and receive PCM data on the time slot specified.

The Station/Trunk status circuit is a serial to parallel 8-bit shift register with tri-state outputs. It is used to monitor the line card information such as hookswitch condition, ground recall detection or ring detection.

The MSB Register is a bidirection 8-bit parallel to serial and serial to parallel shift register for the most significant bits of a data word. The Group Controller CPU loads an 8-bit word relating to the status of LEDS on a keyphone via the line interface card. The same register is used to receive the information regarding the On Hook/Off Hook status and the key depression status of the keyphones.

The LSB Register is a bidirectional 8-bit parallel to serial and serial to parallel shift register for the least significant bits. The Group Controller CPU loads an 8-bit word relating to the group address of the multibutton keyphone via the line interface card. The same is used to receive the complement of the data received by the MSB register.

The Encode logic circuitry performs diphase encoding on the data being sent to the keyphones via the line interface cards.

The Decode circuit decodes the diphase data received from the keyphones via the line interface cards.

The Timing block provides (1) the timing functions needed for station/trunk control, codec control and the station/trunk status blocks. Also, this timing element generates a 'wait' flag to the CPU if interrupted during the middle of sending/receiving information; and (2) the timing function needed to transmit/receive the diphase data from the keyphone.

With the circuit shown in Figure 4, the group controller monitors the condition of its stations and/or trunks to signal these conditions to the system controller. Data directed to the system controller is temporarily stored in the group RAM for polling by the system. In the reverse direction, data from the system bus is forwarded to the destination group RAM for subsequent read out when the group processor is ready to handle the data.

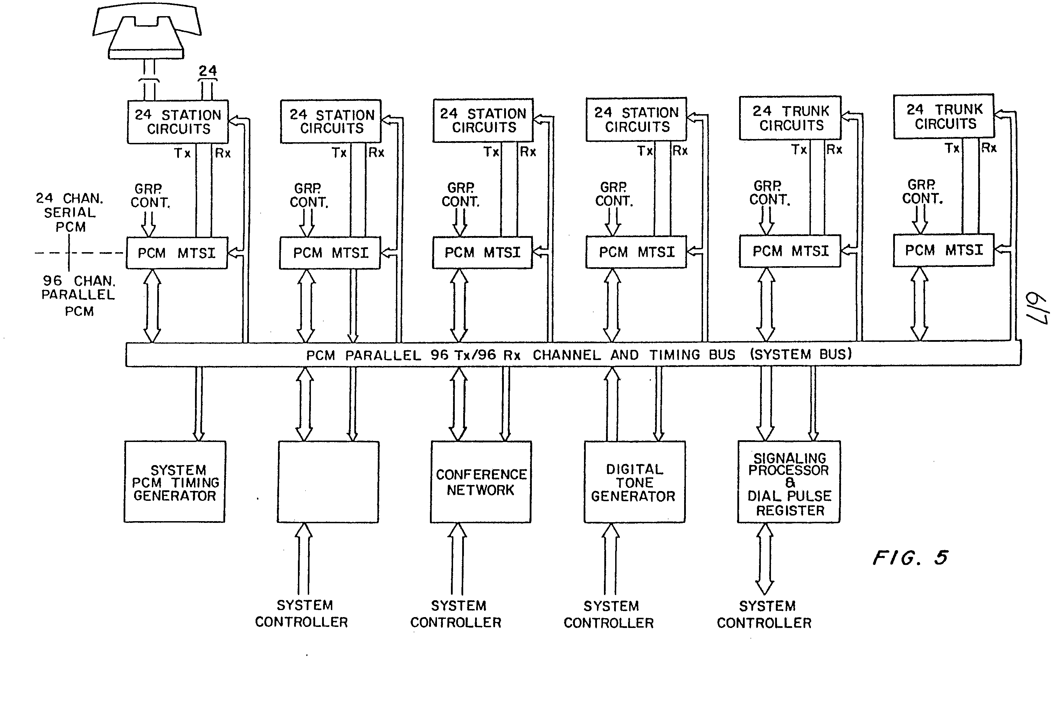

Figure 5 shows a block diagram of the System Voice Switch, or speech path network. The voice switch is based on a Codec per line philosophy and is a fully digital PCM (pulse code modulation) A or $\mu$law, TDM (time division multiplex) 2-stage switch.

An analog voice signal is encoded on the station interface into an 8-bit companded PCM byte. The codec outputs this byte serially during one of 24 time slots in a 125 $\mu$s (8KHz) frame. The 24 outputs within each station group Module are subsequentially collected in a bit serial, byte serial format by a Group MTSI circuit, located on the Group Controller card. A 9th bit for signaling is also collected.

The Group MTSI is under control of the Group Controller processor and may be instructed under program control to output any one of the collected 24 bytes onto the System PCM Bus during one of 192 time slots in a 125 $\mu$s (8KHz) frame.

The MTSI output is in bit parallel, byte serial format.

In the opposite direction, the process is reversed by instructing the Group MTSI to input a 9-bit word during one of the 24 group time slots. In this direction the MTSI input is a bit parallel, byte serial format and output is a bit serial, byte serial format.

Minimal CPU time overhead is imposed by making the MTSI operation independent of the CPU. Once instructed it continues to perform the above action repetitively at the 8KHz voice sampling rate.

The timing required to control and maintain synchronism among all MTSI circuits in the system is generated centrally at the System Controller.

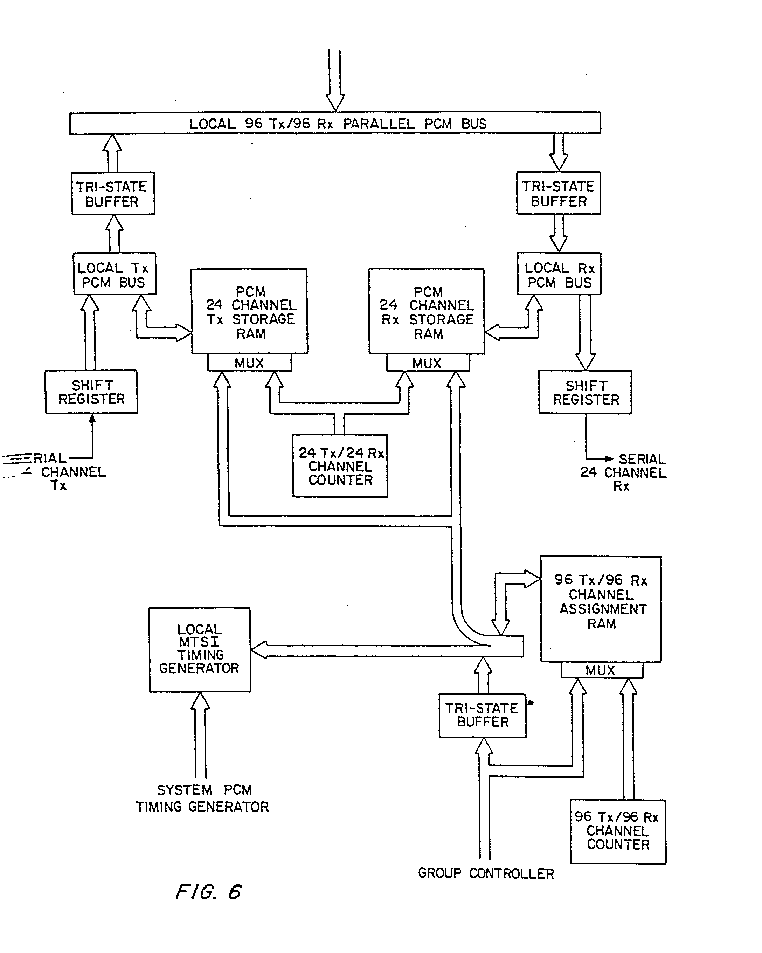

Two types of MTSI circuits could be used. The first type allows independent assignments of Tx and Fx time slots to a line. This is referred to as a two-stage MTSI and requires two instructions from the processor to set up a two-way communication path. The MTSI, Figure 6 is of the two-stage type, having a separate controller for the Tx and Fx functions. The Tx controller appears as a 256 x 5-bit RAM while the Rx controller appears as a 32 x 8-bit RAM to the processor. The processor controls the operation of the MTSI by writing certain bit patterns into these RAMs. The processor can also read the contents of these RAMs to verify data previously written. The MTSI also contains a Processor Interface Controller (PIC). The PIC interlaces the processor's READ/WRITE requests with the MTSI operation. This interface is transparent to both MTSI and the processor. The MTSI controllers have the highest priority for MTSI RAM access. Hence, the PIC forces wait cycles onto the processor until the MTSI controllers have completed their access.

The Tx controller appears as a 256 x 5-bit RAM of the 256 possible addresses, only addresses 0 to 191 being of prime importance. Addresses 0 to 191 refer to the 192 channel slots available on the system parallel PCM highway. The contents of each valid address (0 to 191) is a 5-bit binary number representing a serial Tx channel slot. For example, if address location 152 has the binary number 7 in RAM, then system Tx channel 152 has been assigned to serial Tx channel 7.

The system parallel PCM highway normally has many MTSI's connected to the highway. But only one MTSI Tx controller can be assigned to a given parallel channel slot. All other MTSI Tx controllers must have an unassigned code for that system parallel channel. If more than one MTSI Tx controller is assigned to the same system parallel channel, then a major bus clash will occur resulting in erroneous operation.

During system (or shelf) power-up, any one of the unassigned codes must be written into all 256 locations in the MTSI Tx controller RAM. Also, during a power-up sequence, the Tx controller's system bus drivers must be held in the TRI STATE mode until power-up has been achieved.

The MTSI Rx Controller appears as a 32 x 8-bit RAM. Only addresses 0 to 23 are of prime importance. The 24 RAM addresses (0 to 23) represent one of the 24 Rx serial channel numbers. The 8-bit contents of each address location represents one of the 192 (0 to 191) system parallel channels. Hence the address, together with the contents of that address, determine an Rx channel assignment. For example, if address 16 is assigned to system parallel channel 65, etc.

When writing into the Rx controller RAM, the complement of the actual data must be written. When reading from the Rx controllers may be assigned to the same parallel system PCM channel.

Summarizing, the present apparatus produces a system comprised of modules which are physically joined to produce the system. Each module is electrically coupled to the adjacent module over a first and a second multiple conductor cable to provide a system bus and a PCM bus.

CLAIMS:

1. A modular time division telecommunications system comprising a plurality of terminals, said terminals being grouped into a lesser plurality of groups, said system including a central controller for monitoring said plurality of groups, characterised in this, that each of said groups includes a group controller for monitoring the terminals within the respective group, that individual memory means is associated with each said controller, that further resource circuits are associated with each of said controllers, that each of said controllers is housed in a separate modular unit, that bus means intercommunicate between each controller, its associated memory and resource circuits to transfer call control data within the respective unit, each said bus means being self-contained within its own unit, and that a system bus couples said units, said system bus providing call control and supervision data transfer between said system and said groups over a single multiple conductor cable extending between a modular unit and the adjacent modular units.

2. A system as claimed in Claim 1, characterised in this, that there is a time division speech bus extending between each unit and the adjacent unit to transfer speech in time division coding between the units.

3. A telecommunications system characterised by a plurality of modular units, each said unit including a processor and associated memory, each said unit including a time division data highway internal to said unit for transferring control data between the process- or and its associated memory, a first inter-unit division data highway extending from one unit to the adjacent unit to exchange control data between all units, and a second inter-unit time division data highway comprised of cables extending from a unit to the adjacent unit to transfer voice frequency data between all the units, said units including one system control unit and at least one terminal control unit, each terminal control unit terminating thereat a plurality of terminals over a pair of control data conductors for time division interchange of control data and the terminal control units, and each said terminal control unit including voice frequency control members intercommunicating with the other units over said voice frequency data highway.

FIG. 1

SUBSET STATIONS ———→                    ⌐—— C.O. OR PABX TRUNKS ——⌐

| STATION CIRCUIT 73 | STATION CIRCUIT 96 | TRUNK CIRCUIT 1 | TRUNK CIRCUIT 24 | TRUNK CIRCUIT 25 | TRUNK CIRCUIT 48 |

STATION GROUP BUS

TRUNK GROUP BUS

TRUNK GROUP BUS

STATION GROUP CONTROLLER

TRUNK GROUP CONTROLLER

TRUNK GROUP CONTROLLER

SYSTEM BUS

ATTENDANT CONTROLLER

ADVANCED FEATURE(S)

| FIG. 2A | FIG. 2B |

ATT. NO. 1

ATT. NO. 2

ATT. NO. 3

ATT. NO. 4

TO / FROM FEATURE CONTROLLED

FIG 2

FIG 2B

SINGLE LINE OR MKS TYPE KEY TELEPHONE

FIG 2A

FIG 3

STATION GROUP BUS

DECODE
ENCODE

STA. ADDRESS REGISTER
STATION CONTROL
CODEC CONTROL
STATION STATUS
REGISTER
REGISTER

TIMING

TIMING

INTERNAL GROUP BUS

WAIT

GROUP CPU
GROUP PROGRAM MEMORY
RAM ARBITRATOR
MUX
RAM
CONTROL PCM MTSI PCM DATA BUS TIMING

RESET

STN. GRP. ADDRESS STRAP

CLOCK

BUS SYNC
ADDRESS DECODER

O/P CONTROL LATCH
BUS ISOLATOR
OVERRIDE
PCM BUS ISOLATOR

WAIT

+ VCC

SYSTEM BUS

5/7

0040046

FIG. 4

24 CHAN. SERIAL PCM

96 CHAN. PARALLEL PCM

24 STATION CIRCUITS

24 STATION CIRCUITS

24 STATION CIRCUITS

24 STATION CIRCUITS

24 TRUNK CIRCUITS

24 TRUNK CIRCUITS

Tx  Rx

GRP. CONT.

PCM MTSI

PCM PARALLEL 96 Tx/96 Rx CHANNEL AND TIMING BUS (SYSTEM BUS)

SYSTEM PCM TIMING GENERATOR

CONFERENCE NETWORK

DIGITAL TONE GENERATOR

SIGNALING PROCESSOR & DIAL PULSE REGISTER

SYSTEM CONTROLLER

SYSTEM CONTROLLER

SYSTEM CONTROLLER

SYSTEM CONTROLLER

FIG. 5

6/7

0040046

LOCAL 96 Tx/96 Rx PARALLEL PCM BUS

TRI-STATE BUFFER

TRI-STATE BUFFER

LOCAL Tx PCM BUS

LOCAL Rx PCM BUS

PCM 24 CHANNEL Tx STORAGE RAM

PCM 24 CHANNEL Rx STORAGE RAM

MUX

MUX

SHIFT REGISTER

SHIFT REGISTER

SERIAL CHANNEL Tx

SERIAL 24 CHANNEL Rx

24 Tx/24 Rx CHANNEL COUNTER

96 Tx/96 Rx CHANNEL ASSIGNMENT RAM

MUX

LOCAL MTSI TIMING GENERATOR

TRI-STATE BUFFER

SYSTEM PCM TIMING GENERATOR

96 Tx/96 Rx CHANNEL COUNTER

GROUP CONTROLLER

FIG. 6

## DOCUMENTS CONSIDERED TO BE RELEVANT

| Category | Citation of document with indication, where appropriate, of relevant passages | Relevant to claim |
|---|---|---|
| | NATIONAL TELECOMMUNICATIONS CONFERENCE, 3rd-6th December 1978, pages 47.6.1 - 47.6.5 H. SAWADA et al.: "KC270 digital PABX" <br><br> * Paragraphs 1,4; figures 1,3 * | 1,3 |
| | ELECTRICAL COMMUNICATION, vol. 54, no. 3, 1979, pages 193-198 New York, U.S.A. K.E. ECKARDT et al.: "Architecture of a small to medium size digital exchange" <br><br> * Page 194, right-hand column, lines 18-22; page 196, right-hand column, lines 3-8; figure 4 * | 1-3 |
| | ELECTRICAL COMMUNICATION, vol. 54, no. 3, 1979, pages 186-192 New York, U.S.A. M. LANGENBACH-BELZ: "Small local exchanges using digital techniques" <br><br> * Page 189, left-hand column, line 28 - right-hand column, line 28; figures 5,6 * | 1-3 |
| P | SUPPLEMENT TO ELECTRICAL COMMUNICATION, vol. 55, no. 2, 1980, pages 24-30 New York, U.S.A. "Network terminals and control elements" <br><br> * Page 25, left-hand column, line 7 - right-hand column, line 3; figure 1 * <br><br> -- ./. | 1 |

**CLASSIFICATION OF THE APPLICATION (Int. Cl. ³)**

H 04 Q 11/04
3/54

**TECHNICAL FIELDS SEARCHED (Int. Cl. ³)**

H 04 Q
H 04 M 9/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&. member of the same patent family.
corresponding document

The present search report has been drawn up for all claims

| Place of search | Date of completion of the search | Examiner |
|---|---|---|
| The Hague | 13-07-1981 | MIKKELSEN |

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 2 014 018 (NIPPON TELE-GRAPH)<br><br>   * Page 2, lines 103-128; figure 2 *<br><br>-- | 1,3 | |
| | EUROCON 77 CONFERENCE PROCEEDINGS ON COMMUNICATIONS, 3rd-7th May 1977, pages 2.5.2.1 - 2.5.2.5 Venezia, IT.<br>I. ANDERSSON et al.: "HUGO - A proposal for a high capacity modular digital switch using high speed buses"<br><br>   * In its entirety *<br><br>-- | 1-3 | |
| PE | DE - A - 2 909 703 (T & N)<br><br>   * Page 7, lines 13-29; page 7, line 36 - page 8, line 14 *<br><br>-- | 1-3 | TECHNICAL FIELDS SEARCHED (Int. Cl.³) |
| D | US - A - 3 935 396 (J.A. BARSE-LOTTI)<br><br>   * Abstract *<br><br>---- | 3 | |